# FASCICULE DE BREVET EUROPEEN

(11) **EP 1 170 571 B1**
(45) Date de publication et mention de la délivrance du brevet: **27.11.2002**
(21) Numéro de dépôt: 01401718.0
(22) Date de dépôt: 28.06.2001
(51) Int. Cl.: G01B 7/14, F01D 11/12

(54) **Capteur de mesure de jeux par abrasion multiprofondeur**
Sensor zur Messung des Spiels mittels mehrstufigen Abriebs
Sensor to measure play by multi-stage abrasion

(30) Priorité: 06.07.2000 FR 0008779
(43) Date de publication de la demande: 09.01.2002
(73) Titulaire: SNECMA MOTEURS, 75015 Paris (FR)
(72) Inventeur: Eyraud, Jean-Louis, 77950 Maincy (FR); Patrone, Franck, 77380 Combs la Ville (FR)

(56) Documents cités:
- BE-A- 854 653
- US-A- 5 760 593

## Description

L'invention concerne un dispositif pour mesurer le jeu existant entre les sommets des aubes mobiles d'une couronne d'aubes et la paroi intérieure du carter entourant ladite couronne d'aubes dans une turbo-machine (voir BE-A-0 854 653).

Dans la mise au point des turbomachines, la connaissance des jeux en haut d'aubes mobiles est un élément fondamental pour la maîtrise de la thermique de la machine, afin d'améliorer ses performances.

On s'efforce de rendre ce jeu aussi faible que possible, tout en évitant le risque de frottement des extrémités des aubes sur la paroi intérieure du carter.

Mais étant donné qu'il est extrêmement difficile d'optimiser ce jeu par calcul, du fait des nombreuses grandeurs mécaniques ou thermiques qui interviennent, on en est réduit à mesurer le jeu entre les sommets des aubes et la paroi intérieure du carter, au moyen de capteurs.

La mesure du jeu peut se faire en continu en fonctionnement. Dans ce cas, on utilise des capteurs de type capacitif qui donnent des signaux de faible amplitude.

La mesure du jeu peut également se faire de manière ponctuelle au cours d'essais ou de maintenance. Dans ce cas, on utilise en général une sonde en matériau abrasif qui comporte un circuit électrique en U dont la base se trouve à une certaine cote de la paroi interne du carter. Lorsque la base du circuit électrique est érodée par abrasion, le circuit électrique s'ouvre, le jeu est alors inférieur à la valeur de la cote qui correspond à une profondeur de jeu calibrée. Ce capteur présente l'avantage d'être robuste, mais il ne donne qu'un seul résultat au cours de l'essai.

Or fréquemment, on veut mesurer l'occurrence de plusieurs dimensions de jeu lors d'un même essai de turbomachine. Pour ce faire, on dispose en pratique plusieurs capteurs de type résistif à la périphérie de la couronne d'aubes, qui définissent chacun une profondeur de jeu calibrée.

Partant de cet état de la technique, l'invention s'est donnée pour but de proposer un dispositif simple, fiable et peu coûteux qui permette de mesurer plusieurs profondeurs de jeux décroissants.

L'invention atteint son but par le fait que le dispositif proposé comporte une sonde susceptible d'être montée radialement sur le carter et dont une extrémité au moins est réalisée en un matériau susceptible d'être abrasé par les sommets des aubes en rotation, un circuit imprimé disposé dans le plan médian de ladite sonde qui contient l'axe de rotation de la couronne d'aubes, ce circuit imprimé comportant une pluralité de circuits électriques adjacents en U dont les bases sont disposées dans une extrémité de sonde susceptible d'être abrasée par les sommets d'aubes et sont situées à des profondeurs différentes par rapport à un niveau de référence définissant la paroi intérieure du carter, et des moyens pour reconnaître les circuits électriques en U coupés par abrasion et les circuits électriques intacts.

Chaque base correspondant ainsi à une profondeur de jeu calibrée et le dispositif permet de constater au cours d'un même essai la diminution éventuelle du jeu, et le positionnement des sommets des aubes entre deux profondeurs calibrées. La mise en oeuvre du dispositif nécessite le positionnement précis d'un seul capteur, alors que, dans l'état de la technique, il faut positionner avec précision plusieurs capteurs ayant chacun un seul circuit électrique en U.

Pour diminuer le nombre de lignes conductrices dans le circuit imprimé, deux circuits électriques adjacents comportent une branche commune.

Avantageusement, les profondeurs des bases augmentent d'un pas prédéterminé entre le circuit électrique latéral le plus court et le circuit électrique latéral le plus long.

Pour diminuer le câblage externe de la sonde, la branche externe du circuit électrique latéral le plus court est reliée à une première borne électrique et les autres branches des circuits électriques sont reliées à une deuxième borne électrique via une résistance d'un faisceau de résistances.

De préférence, les résistances du faisceau ont sensiblement toutes la même valeur. Les bornes sont reliées à un circuit électrique extérieur à la sonde qui comporte des moyens pour mesurer l'impédance équivalente des résistances des circuits intacts. Cette mesure d'impédance permet de connaître le nombre des circuits les plus longs coupés et par le fait même le positionnement du jeu restant entre deux profondeurs de jeu calibrées.

D'autres avantages et caractéristiques de l'invention ressortiront à la lecture de la description suivante faite à titre d'exemple et en référence aux dessins annexés, dans lesquels :
- la figure 1 est une vue schématique du dispositif selon l'invention qui montre la sonde montée sur le carter et les moyens de mesure associés ;
- la figure 2 est une vue en perspective de la sonde ;
- la figure 3 est une vue de face du circuit imprimé ; et
- la figure 4 est une vue selon le plan médian de la sonde passant par l'axe de rotation de la couronne d'aubes qui montre le circuit imprimé partiellement abrasé par les sommets d'aubes.

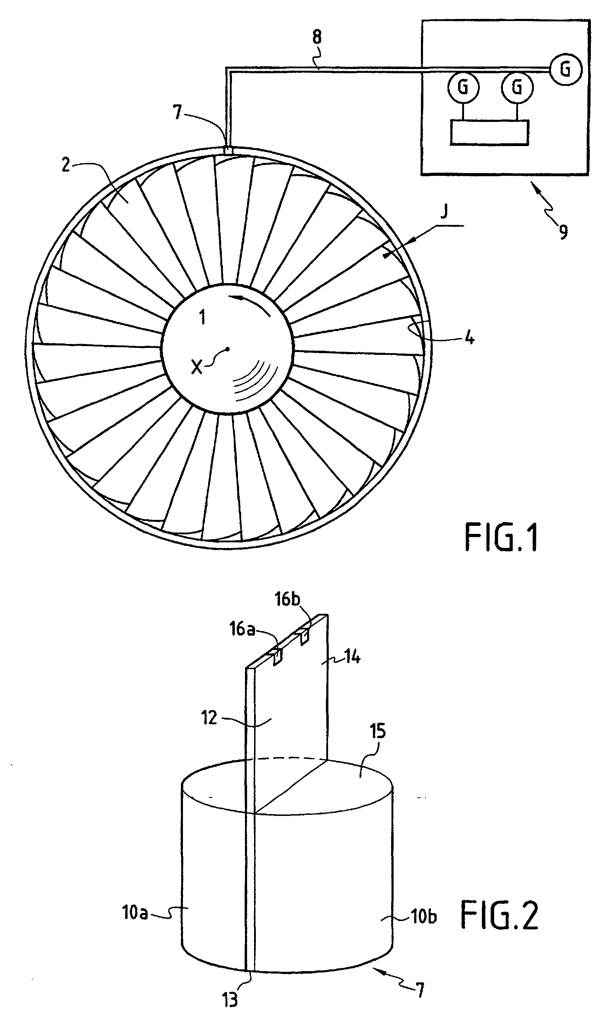

La figure 1 montre une roue 1 d'une turbomachine d'axe X qui comporte à sa périphérie une couronne d'aubes 2 dont les sommets 3 sont disposés à une distance J ou jeu de la paroi interne 4 d'un carter 5 d'axe X. Dans un orifice 6 de ce carter 5 est disposée une sonde 7 reliée par des conducteurs électriques 8 à un dispositif 9 de mesure du jeu J.

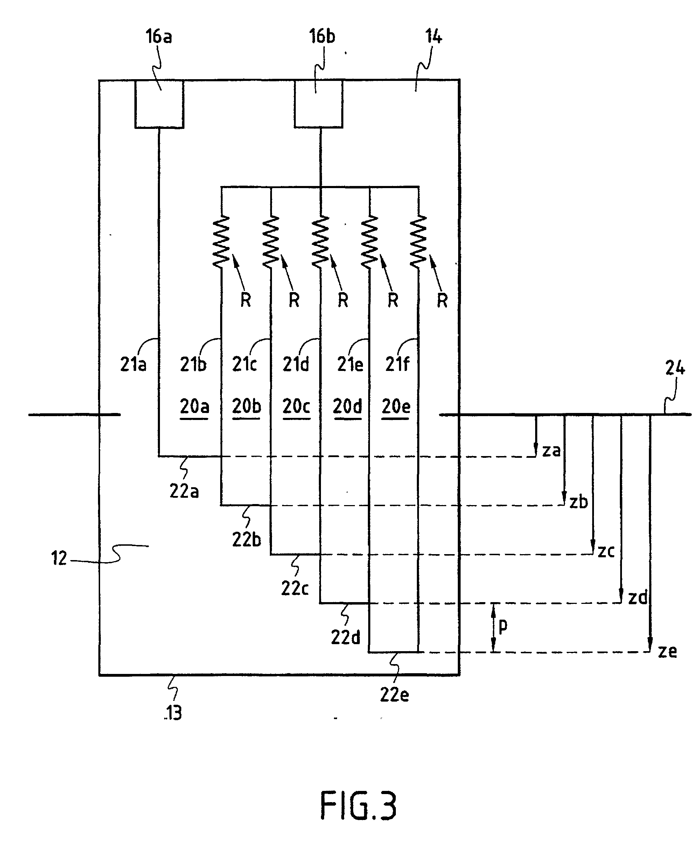

La sonde 7, montrée en perspective sur la figure 2, se présente sous la forme d'un corps cylindrique constitué de deux demi-cylindres 10a, 10b entre lesquels est maintenu par collage ou par pression un circuit imprimé 12. Les deux demi-cylindres 10a et 10b sont réalisés en un matériau susceptible d'être abrasé par les sommets 3 des aubes 2, tel que le Téflon ou le graphite.

Le circuit imprimé 12 est de préférence souple et éventuellement multicouche. Le bord inférieur 13 du circuit imprimé 12 est disposé dans la face d'extrémité de la sonde 7 qui est destinée à être introduite à l'intérieur du carter 5.

L'autre extrémité 14 du circuit imprimé émerge de la face supérieure 15 de la sonde 7 et comporte notamment la connectique et les bornes électriques 16a, 16b de raccordement des conducteurs électriques 8.

Le circuit imprimé 12 comporte une pluralité de circuits électriques en U adjacents 20a à 20e, constitués par des branches conductrices parallèles et verticales 21a à 21f de longueurs différentes et croissantes de la gauche vers la droite, ainsi que cela est montré sur la figure 3, et des bases 22a à 22e parallèles au bord 13 et décalées verticalement d'un pas p constant. Chaque base relie l'extrémité inférieure d'une branche de gauche à la branche de droite immédiatement adjacente. Chaque branche intermédiaire 21b à 21e constitue une branche électrique pour deux circuits électriques adjacents.

La branche externe 21a du circuit électrique 20a le plus court est raccordée à la borne électrique 16a. Les autres branches 21b à 21f sont raccordées à la borne 16b chacune par une résistance R. De préférence, toutes les résistances R ont la même valeur.

La référence 24 désigne un niveau de référence parallèle au bord 13. Ainsi, les bases 22a à 22e des circuits imprimés 20a à 20e sont disposées à des profondeurs respectives za à ze par rapport au niveau de référence 24.

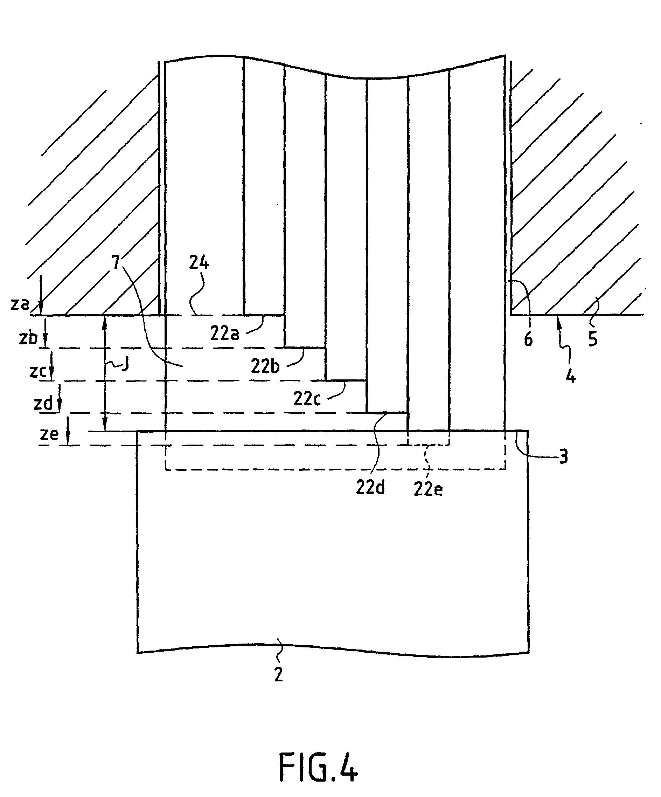

La figure 4 montre la disposition de la sonde 7 dans l'orifice 6 du carter 5. La base 22a du circuit électrique 20a est disposée dans le plan tangent à la paroi intérieure 4 du carter 5, à titre d'exemple. Ainsi, les bases 22b à 22e des autres circuits électriques 20b à 20e sont espacées de la paroi intérieure 4 du carter 5 d'une distance respectivement égale à p, 2p, 3p et 4p.

Si le jeu J est compris entre zd et ze ainsi que cela est montré sur la figure 4, l'extrémité inférieure de la sonde 7, montrée en pointillé sur la figure 4, est abrasée par l'extrémité 3 des aubes 2 en rotation autour de l'axe X. La branche 22e a été érodée par abrasion. Le circuit 20e est alors coupé, et aucun courant ne peut passer par la résistance R la plus à droite du faisceau visible sur la figure 3.

Si au cours de l'essai en fonctionnement de la turbomachine, le jeu J diminue et est compris entre zc et zd, la base 22d sera à son tour érodée, et seules trois résistances R seront parcourues par du courant au cours de l'essai. Lors de la consommation du jeu J, le processus précédent se répète par chacun des circuits dans l'ordre de leur hauteur décroissante.

Les résistances R peuvent être réalisées soit sous forme de résistances CMS, soit sous forme d'un dépôt de couche épaisse. La présence des résistances R permet de relier la sonde 7 au dispositif de mesure 9 du jeu J par deux conducteurs électriques 8. Ce dispositif de mesure 9 comporte essentiellement une source de courant continu G, un voltmètre et un ampèremètre ou plus simplement un ohmmètre.

Le rapport entre la mesure du voltage V et la mesure de l'intensité I permet de connaître la valeur de l'impédance Z du réseau de résistances R au cours de l'essai et par le fait même le nombre de circuits électriques intacts et le nombre de circuits électriques coupés. On en déduit facilement le positionnement des sommets 3 des aubes 2 par rapport à la paroi interne 4 du carter 5.

## Revendications

1. Dispositif pour mesurer le jeu (J) existant entre les sommets (3) des aubes mobiles (2) d'une couronne d'aubes et la paroi intérieure (4) du carter (5) entourant ladite couronne d'aubes dans une turbomachine, **caractérisé par le fait qu'**il comporte une sonde (7) susceptible d'être montée radialement sur le carter (5) et dont une extrémité au moins est réalisée en un matériau susceptible d'être abrasé par les sommets (3) des aubes (2) en rotation, un circuit imprimé (12) disposé dans le plan médian de ladite sonde (7) qui contient l'axe de rotation (X) de ladite couronne d'aubes,
ce circuit imprimé (12) comportant une pluralité de circuits électriques (20a à 20e) adjacents en U dont les bases (22a à 22e) sont disposées dans une extrémité de sonde susceptible d'être abrasée par les sommets (3) d'aubes et sont situées à des profondeurs différentes (za à ze) par rapport à un niveau de référence (24) définissant la paroi (4) intérieure du carter (5),
et des moyens (9) pour reconnaître les circuits électriques en U coupés par abrasion et les circuits électriques intacts.

2. Dispositif selon la revendication 1, **caractérisé par le fait que** deux circuits électriques adjacents comportent une branche commune.

3. Dispositif selon la revendication 2, **caractérisé par le fait que** les profondeurs (za à ze) des bases (22a à 22e) augmentent d'un pas prédéterminé entre le circuit électrique latéral le plus court (20a) et le circuit électrique latéral le plus long (20e).

4. Dispositif selon la revendication 3, **caractérisé par le fait que** la branche externe (21a) du circuit électrique latéral le plus court (20a) est reliée à une première borne électrique (16a), et les autres branches des circuits électriques sont reliées à une deuxième borne électrique (16b) commune via une résistance (R) d'un faisceau de résistances.

5. Dispositif selon la revendication 4, **caractérisé par le fait que** les résistances (R) du faisceau ont sensiblement toutes la même valeur.

6. Dispositif selon l'une des revendications 4 ou 5, **caractérisé par le fait que** lesdites bornes (16a, 16b) sont reliées à un circuit électrique extérieur à la sonde qui comporte des moyens (9) pour mesurer l'impédance équivalente des résistances des circuits intacts.

## Claims

1. Device for measuring the play (J) existing between the tips (3) of the moving blades (2) of a ring of blades and the inside surface (4) of the casing (5) surrounding the said ring of blades in a turboshaft engine, **characterized in that** it comprises a probe (7) that can be mounted radially on the casing (5) and at least one end of which is made from a material that is capable of being abraded by the tips (3) of the rotating blades (2), a printed circuit (12) disposed in the median plane of the said probe (7) which contains the axis of rotation (X) of the said ring of blades,
this printed circuit (12) comprising a plurality of adjacent U-shaped electrical circuits (20a to 20e) whose bases (22a to 22e) are disposed in a probe end that can be abraded by the blade tips (3) and are located at different depths (za to ze) with respect to a reference level (24) defining the internal surface (4) of the casing (5),
and means (9) of distinguishing the U-shaped electrical circuits cut by abrasion and the intact electrical circuits.

2. Device according to Claim 1, **characterized in that** two adjacent electrical circuits comprise a common branch.

3. Device according to Claim 2, **characterized in that** the depths (za to ze) of the bases (22a to 22e) increase by a predetermined step between the shortest lateral electrical circuit (20a) and the longest lateral electrical circuit (20e).

4. Device according to Claim 3, **characterized in that** the outer branch (21a) of the shortest lateral electrical circuit (20a) is connected to a first electrical terminal (16a), and the other branches of the electrical circuits are each connected to a common second electrical terminal (16b) via a resistor (R) of an array of resistors.

5. Device according to Claim 4, **characterized in that** the resistors (R) of the array all have substantially the same value.

6. Device according to one of Claims 4 or 5, **characterized in that** the said terminals (16a, 16b) are connected to an electrical circuit external to the probe and which contains means (9) for measuring the equivalent impedance of the resistors of the intact circuits.

## Patentansprüche

1. Vorrichtung zur Messung des Spiels (J) zwischen den Spitzen (3) der Rotorschaufeln (2) eines Schaufelrings und der Innenwand (4) des Gehäuses (5), das diesen Schaufelring in einem Turbotriebwerk umgibt,
**dadurch gekennzeichnet,**
**dass** sie eine Sonde (7) aufweist, die radial auf das Gehäuse (5) montiert werden kann und bei der wenigstens eine Ende aus einem Material besteht, das von den Spitzen (3) der sich drehenden Schaufeln (2) abgerieben werden kann, und eine gedruckte Schaltung (12) aufweist, die in der Mittelebene dieser Sonde (7) angeordnet ist, durch die auch die Drehachse (X) des genannten Schaufelrings verläuft,
wobei diese gedruckte Schaltung (12) mehrere aneinandergrenzende, U-förmige elektrische Schaltkreise (20a bis 20e) aufweist, dere Basen (22a bis 22e) in einem Sondenende angeordnet, ist, das geeignet ist, von den Schaufelspitzen (3) abgerieben zu werden, und sie befinden sich in unterschiedlichen Tiefen (za bis ze), bezogen auf eine Bezugshöhe (24), die die Innenwand (4) des Gehäuses (5) bestimmt, und
**dass** sie Mittel (9) zur Erkennung der U-fömigen elektrischen Schaltkreise, die durch Abrieb unterbrochen werden, und der intakten elektrischen Schaltkreise aufweist.

2. Vorrichtung nach Anspruch 1,
**dadurch gekennzeichnet,**
**dass** zwei aneinandergrenzende elektrische Schaltkreise einen gemeinsamen Zweig haben.

3. Vorrichtung nach Anspruch 2,
**dadurch gekennzeichnet,**
**dass** die Tiefen (za bis ze) der Basen (22a bis 22e) zwischen dem kürzesten seltüchen elektrischen Schaltkreis (20a) und dem längsten seitlichen elektrischen Schaltkreis (20e) jeweils um eine vorbestimmte Stufe ansteigen.

4. Vorrichtung nach Anspruch 3,
**dadurch gekennzeichnet,**
**dass** der äußere Zwieig (21a) des kürzesten seitlichen elektrischen Schaltkreises (20a) mit einem ersten elektrischen Anschluss (16a) verbunden ist und die anderen Zweige der elektrischen Schaltkreise über einen Widerstand (R) eines Widerstandsbündels mit einem zweiten, gemeinsamen elektrischen Anschluss (16b) verbunden sind.

5. Virrichtung nach Anspruch 4,
**dadurch gekennzeichnet,**
**dass** die Widerstände (R) des Widerstandsbündels im wesentlichen alle den gleichen Wert haben.

6. Vorrichtung nach Anspruch 4 oder 5,
**dadurch gekennzeichnet,**
**dass** die Anschlüsse (16a, 16b) mit einem außeralb der Sonde befindlichen elektrischen Schaltkreis verbunden sind, der Mittel (9) zur Messung der entsprechenden. Impedanz der Widerstände der intakten elektrischen Schaltkreise enthält.
